# EUROPÄISCHE PATENTSCHRIFT

(11) **EP 1 279 860 B1**
(45) Veröffentlichungstag und Bekanntmachung des Hinweises auf die Patenterteilung: **06.09.2006**
(21) Anmeldenummer: 02012752.8
(22) Anmeldetag: 08.06.2002
(51) Int. Cl.: F16H 1/12, F16H 57/02

(54) **Getriebe für eine Stellvorrichtung**
Actuator gearing
Engrenage pour un actionneur

(30) Priorität: 27.07.2001 DE 10136811
(43) Veröffentlichungstag der Anmeldung: 29.01.2003
(73) Patentinhaber: ROBERT BOSCH GMBH, 70442 Stuttgart (DE)
(72) Erfinder: Mahfoudh, Samir, 77815 Buehl (DE); Bux, Harald, 73460 Huettlingen (DE); Paweletz, Anton, 70736 Fellbach (DE)

(56) Entgegenhaltungen:
- EP-A- 1 016 581
- DE-A- 3 434 093
- DE-A- 3 736 540
- DE-A- 19 944 133
- DE-U- 9 205 374
- GB-A- 557 657
- US-A- 3 206 993
- US-A- 4 917 162
- US-A- 5 713 671
- US-A- 6 035 736

## Beschreibung

### Stand der Technik

Die Erfindung geht aus von einem Getriebe für eine Stellvorrichtung, nach dem Oberbegriff des Anspruchs 1.

Solche Getriebe sind als Stirnradgetriebe mit parallel zueinander ausgerichteten An- und Abtriebswellen sowie als Schneckengetriebe oder Schraubradgetriebe mit sich kreuzenden An- und Abtriebswellen für die Fahrzeuglenkung und verschiedene Stellfunktionen im Fahrzeug, wie elektrische Fensterbetätigung und Sitzverstellung, im Einsatz. Diese Zahnradgetriebe müssen, um eine hohe Präzision und extreme Geräuscharmut bei reproduzierbaren Stellvorgängen sicherzustellen, spielfrei sein, wobei zusätzlich eine Leichtgängigkeit des Getriebes gefordert wird.

Mit der US-A-3 206 993 ist ein gattungsbildendes Getriebe offenbart, bei dem zwei Zahnräder auf jeweils einer Getriebewelle gelagert sind. Diese Getriebewellen sind jeweils über Exzenterelemente in einem feststehenden Gehäuse verstellbar angeordnet. Die beiden Zahnräder greifen mit ihren Außenverzahnungen ineinander, wobei eines der Zahnräder aus zwei seperaten Bauteilen besteht, die koaxial ineinander angeordnet sind. Zwischen dem inneren und dem äußeren Teil dieses Zahnrads sind Federhülsen in kreisförmigen Aussparungen angeordnet, die eine begrenzte Beweglichkeit der Außenverzahnung gegenüber der Getriebewelle des Zahnrads ermöglichen.

Bei einem bekannten Lenkgetriebe für Fahrzeuge, das als elektromotorisch angetriebenes Schneckengetriebe ausgebildet ist (JP-A 10 281 235), wird das elektromotorisch angetriebene Getriebeelement, Ritzel oder Schnecke, in einer elastischen Lagerung vorgespannt montiert. Die Lagerung wird von einem zwischen Ritzellager und Gehäuse angeordneten O-Ring aus Gummi gebildet. Bei diesem Getriebe tritt kein Spiel auf und der Verschleiß des Getriebes wird selbsttätig ausgeglichen. Nachteilig an dieser Ausführung ist jedoch, daß der O-Ring im Laufe der Zeit altert und somit die Vorspannung zurückgeht. Außerdem kann das Ritzel nicht nur in radialer sondern auch in tangentialer Richtung ausgelenkt werden, was die Lenkpräzision verringert. Eine resultierende Lageexzentrizität des Rotors im Ständer führt darüber hinaus zu einer Verschlechterung des Motorbetriebs und zusätzlicher Beanspruchung der Lager.

Zur Herstellung der Spielfreiheit in einem bei einer Lenkvorrichtung eingesetzten Stirnradgetriebe (DE 100 51 306.9) hat man bereits vorgeschlagen, durch eine in Radialrichtung verschwenkbare Lagerung der das Ritzel tragenden Antriebswelle eine Vorspannung zwischen Ritzel und dem damit kämmenden Zahnrad herzustellen. Hierzu ist die Antriebswelle im Motorgehäuse eines Elektromotors mittels eines Festlagers und eines Loslagers gelagert , wobei das Loslager in radialer Richtung im Motorgehäuse verschiebbar ist. Zwischen Loslager und Gehäuse ist ein Federelement, z.B. eine Spiralfeder oder eine Tellerfeder, angeordnet, das das Ritzel auf das Zahnrad preßt.

Die Probleme der obigen Getriebe werden durch ein Getriebe für eine Stellvorrichtung gemäß Anspruch 1 oder gemäß Anspruch 2 gelöst.

### Vorteile der Erfindung

Die erfindungsgemäßen Getriebe haben den Vorteil, daß durch die Kombination von radial federnder Ausbildung des auf der Antriebswelle sitzenden ersten Getriebeelements einerseits und einstellbarer Verschiebemöglichkeit des Antriebswellen-Lagers andererseits eine individuelle Einstellung der Getriebeelemente mit Ausgleich von Toleranzen in radialer Richtung im Montageprozeß vorgenommen werden kann und im Betrieb auftretende "dynamische" Ungenauigkeiten selbständig ausgeglichen werden. Dynamische Ungenauigkeiten im Getriebe treten als Folge von thermischen Verformungen, Fliehkräften oder Verschleiß auf. Zudem ist auch ein Ausgleich von Schiefstellung des ersten Getriebeelements in allen Ebenen möglich. Eine Unwucht in dem rotierenden ersten Getriebeelement kann bis auf eine nicht störende geringe Restunwucht reduziert werden. Die Spielfreiheit des Getriebes bleibt auch langfristig bei in den kämmenden Außenverzahnungen der Getriebeelemente auftretendem Verschleiß erhalten, da das mindestens eine Federelement in dem ersten Getriebeelement aufgrund seiner radialen Elastizität auch bei zunehmenden Verschleiß eine Vorspannung zwischen den Getriebeelementen aufrechterhält. Die Vorspannung kann dabei durch eine geeignete Materialauswahl für das mindestens eine Federelement und eine programmierbare Federcharakteristik optimiert werden. Darüber hinaus kann das mindestens eine Federelement auch als Überdrehsicherung genutzt werden, da bei einem extrem hohen Lastmoment am zweiten Getriebeelement das Federelement sehr stark komprimiert und somit ein Auseinandergleiten der Außenverzahnungen der beiden Getriebeelemente möglich wird.

Die erfindungsgemäßen Getriebe eignen sich besonders gut zur Integration in eine elektromotorische Stellvorrichtung, wobei die Rotorwelle des Elektromotors zugleich die Antriebswelle des Getriebes bildet und das Antriebswellen-Lager als Rotorwellenlager per se im Elektromotor vorhanden ist. Dadurch, daß der vorstehend beschriebene dynamische Spielausgleich im Getriebe, also außerhalb des Elektromotors, erfolgt, haben Stator und Rotor eine stets feste Zuordnung zueinander, so daß der Motorluftspalt sich nicht verändert und die Motorcharakteristiken erhalten bleiben.

Durch die in den weiteren Ansprüchen aufgeführten Maßnahmen sind vorteilhafte Weiterbildungen und Verbesserungen der in Ansprüchen 1 und 2 angegebenen Getriebe möglich.

Gemäß einer vorteilhaften Ausführungsform der Erfindung ist zwischen dem Antriebswellen-Lager und dem Halter eine Exzentervorrichtung angeordnet, mittels welcher die Relativverschiebung des Antriebswellen-Lagers zum Halter im Montageprozeß vorgenommen werden kann. Die Exzentervorrichtung weist zwei aneinanderliegende, kreisringförmige Paßflächen auf, von denen eine dem Antriebswellen-Lager zugeordnet ist und eine Exzentrizität gegenüber der Lagerachse aufweist und die andere dem Halter zugeordnet ist. Durch Verdrehen der Paßflächen gegeneinander wird eine entsprechende Relativverschiebung des Antriebswellen-Lagers und damit der Antriebswelle erzwungen.

Gemäß einer bevorzugten Ausführungsform der Erfindung ist das mindestens eine Antriebswellen-Lager in einem Motorgehäuse eines Elektromotors aufgenommen, dessen Rotorwelle mit ihrem aus dem Motorgehäuse vorstehenden Wellenabschnitt die Antriebswelle bildet, und die Abtriebswelle in einem Getriebegehäuse drehend gelagert. Motorgehäuse und Getriebegehäuse sind an dem Halter befestigt, wobei die Relativverschieblichkeit des mindestens einen Antriebswellen-Lagers durch eine verschiebbare Festlegung des Motorgehäuses am Halter hergestellt ist. Die vorerwähnten Paßflächen der Exzentervorrichtung werden dabei am Motorgehäuse und am Halter ausgebildet.

Gemäß einer vorteilhaften Ausführungsform der Erfindung besteht die Exzentervorrichtung aus zwei gegeneinander verdrehbaren Exzenterringen, deren aneinanderliegende Ringflächen die Paßflächen bilden. Der innere Exzenterring ist mit dem Motorgehäuse und der äußere Exzenterring ist mit dem Halter jeweils starr verbunden. Die Feststellmittel zur Festlegung der gewünschten Relativstellung von Motorgehäuse und Getriebegehäuse sind zwischen den beiden Gehäusen wirksam. Die separate Fertigung der Exzenterringe vereinfacht die fertigungstechnische Herstellung der Exzentervorrichtung.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt einer Stellvorrichtung für ein Kraftfahrzeug mit einem elektromotorisch angetriebenen Schneckengetriebe, schematisiert dargestellt,
- Fig. 2: eine vergrößerte Schnittdarstellung einer Exzentervorrichtung zwischen Motorgehäuse und Halter in der Stellvorrichtung gemäß Fig. 1,
- Fig. 3: eine vergrößerte perspektivische Darstellung der Schnecke mit erfindungsgemäßen Federelement gemäß Anspruch 2, Nabe und Mantel im Schneckengetriebe gemäß Fig. 1,
- Fig. 4: eine vergrößerte Stirnansicht der Schnecke in Fig. 1 mit einem erfindungsgemäßen Federelement gemäß Anspruch 1,
- Fig. 5: eine perspektivische Darstellung einer Hülse zur Festlegung des Federelements gemäß Fig. 4,
- Fig. 6: einen vergrößerten Ausschnitt des Federelements in Fig. 4,
- Fig. 7: ein Diagramm der Abstandsdifferenz δR zwischen Mantel und Nabe der Schnecke über den Drehwinkel der Schnecke.

### Beschreibung des Ausführungsbeispiels

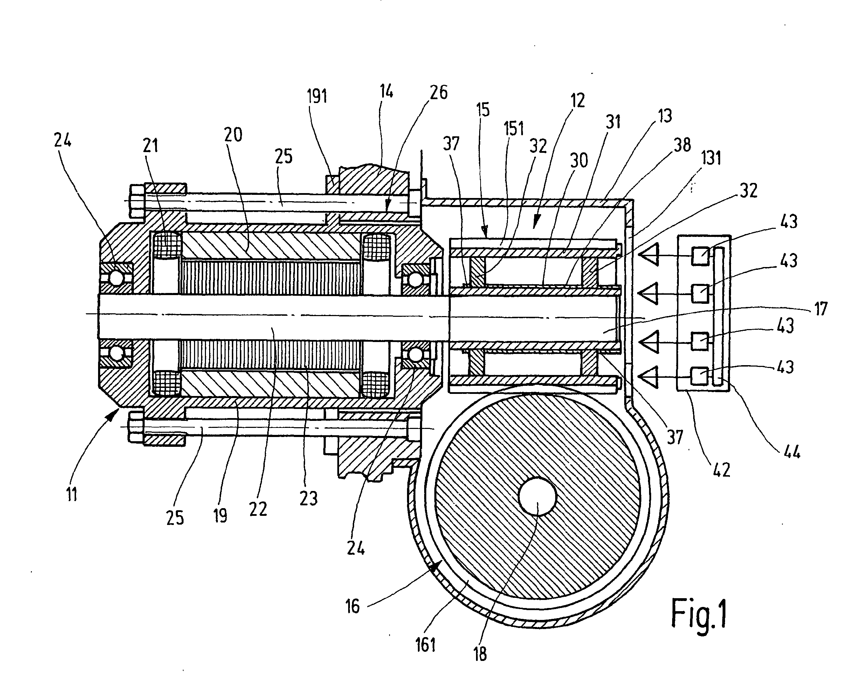

Die in Fig. 1 im Längsschnitt schematisiert dargestellte elektromotorische Stellvorrichtung für ein Kraftfahrzeug weist ein von einem Elektromotor 11 angetriebenes Schneckengetriebe 12 als Ausführungsbeispiel für ein allgemeines Zahnradgetriebe auf. Das Schneckengetriebe 12 ist in einem Getriebegehäuse 13 aufgenommen, das an einem Halter 14 für den Elektromotor 11 befestigt ist. Der als Montageplatte ausgeführte Halter 14, der in Fig. 1 nur ausschnittweise dargestellt ist, dient gleichzeitig der Befestigung der Stellvorrichtung im Kraftfahrzeug.

Das Schneckengetriebe 12 besteht aus einem als Schnecke 15 ausgebildeten ersten Getriebeelement mit einer Außenverzahnung 151 und aus einem zweiten Getriebeelement, dem sog. Schneckenrad 16 mit Außenverzahnung 161. Die Schnecke 15 sitzt drehfest auf einer Antriebswelle 17 und das Schneckenrad 16 sitzt drehfest auf einer Abtriebswelle 18. Antriebswelle 17 und Abtriebswelle 18 sind zueinander gekreuzt ausgerichtet.

Der Elektromotor 11 weist in bekannter Weise einen in einem Motorgehäuse 19 festgelegten Stator 20 mit Statorwicklung 21 und einen auf einer Rotorwelle 22 drehfest sitzenden Rotor 23 auf, der im Ausführungsbeispiel der Fig. 1 Permanentmagnete trägt. Die Rotorwelle 22 ist über zwei Radiallager 24 im Motorgehäuse 19 abgestützt. Der aus dem Motorgehäuse 19 vorstehende Rotorwellenabschnitt ragt in das Getriebegehäuse 13 hinein und bildet die mit der Rotorwelle 22 einstückige Antriebswelle 17 des Schneckengetriebes 12. Das Motorgehäuse 19 ist über einen Gehäuseflansch 191 am Halter 14 aufgenommen und wird mittels Schraubenbolzen 25 am Halter 14 festgespannt.

Zur Herstellung einer Spielfreiheit im Schneckengetriebe 12 ist es erforderlich, zwischen den Getriebeelementen Schnecke 15 und Schneckenrad 16 eine minimale Vorspannung über den gesamten Drehweg aufrechtzuerhalten, die aber nicht so groß sein darf, daß sie zu einer Schwergängigkeit oder gar einem Verklemmen des Schneckengetriebes 12 führt. Die Einstellung dieser speziell abgestimmten Vorspannung und die Beseitigung von Toleranzen, die aus der nicht perfekten Geometrie des Elektromotors 11 bzw. des Schneckengetriebes 12 sich ergeben, wird durch eine Winkeleinstellung des Motorgehäuses 19 gegenüber dem Halter 14 erreicht, während dynamische Ungenauigkeiten, die als Folge thermischer Verformungen, Fliehkräfte oder durch Verschleiß während des Betriebs auftreten, durch eine noch nachfolgend beschriebene "innere Elastizität" der Schnecke 15 und durch die damit verbundene dynamische Anpassung der Schnecke 15 an das Schneckenrad 16 im Betrieb ausgeglichen werden.

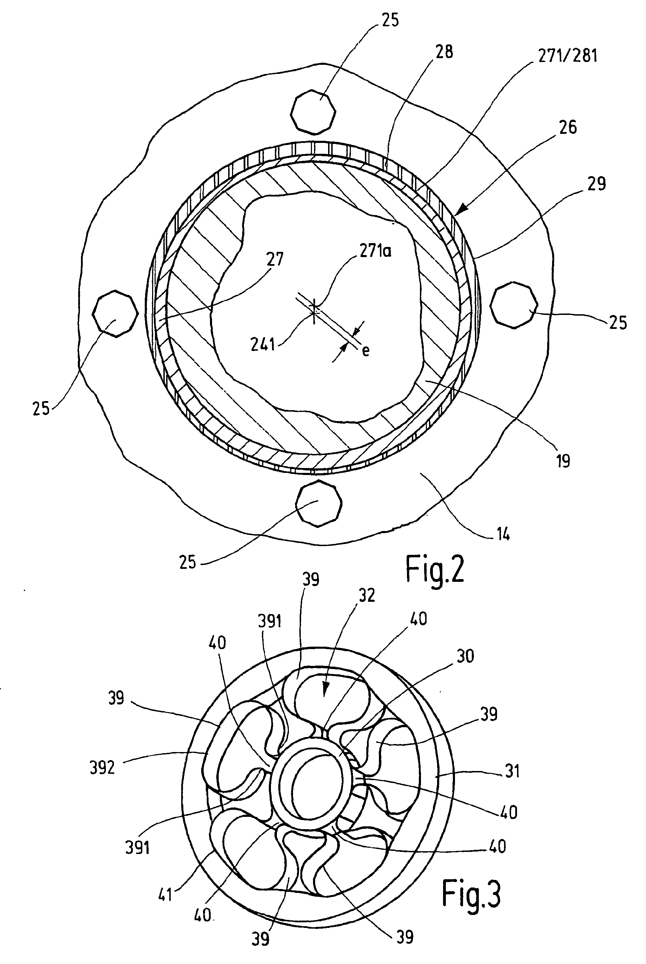

Zur Winkeleinstellung des Motorgehäuses 19 gegenüber dem Halter 14 ist eine Exzentervorrichtung 26 zwischen Motorgehäuse 19 und Halter 14 vorgesehen, die zwei gegeneinander verdrehbare Exzenterringe 27, 28 aufweist, deren aneinanderliegende Ringflächen zylinderförmige Paßflächen 271, 281 bilden. Der innere Exzenterring 27 ist dabei am Außenumfang des Motorgehäuses 19 befestigt, wobei seine Paßfläche 271 so ausgebildet ist, daß der Mittelpunkt 271a der Paßfläche 271 gegenüber der Lagerachse 241 des Radiallagers 24, die mit der Achse der Rotorwelle 22 zusammenfällt, um die Exzentrizität e (Fig. 2) verschoben ist. Der äußere Exzenterring 28 ist in einer im Halter 14 ausgebildeten Aufnahmeöffnung 29 für das Motorgehäuse 19 befestigt. In Fig. 2 ist die Exzentervorrichtung 26 mit den beiden Exzenterringen 27, 28 und der Aufnahmeöffnung 29 im Halter 14 vergrößert dargestellt. Wird bei gelösten Schraubenbolzen 25 das Motorgehäuse 19 mit dem daran befestigten inneren Exzenterring 27 in dem äußeren Exzenterring 28 gedreht, so verschiebt sich die Position der Lagerachse 241 relativ zum Halter 14 und entsprechend können Toleranzen zwischen Schnecke 15 und Schneckenrad 16 ausgeglichen werden. Ist eine gewünschte Verdrehstellung des Motorgehäuses 19 erreicht, so wird durch Anziehen der Schraubenbolzen 25 das Motorgehäuse 19 über den Gehäuseflansch 191 kraftschlüssig am Halter 14 festgespannt.

Die Schnecke 15 weist eine drehfest mit der Antriebswelle 17 verbundene Nabe 30, einen die Außenverzahnung 151 tragenden, konzentrischen, hohlzylindrischen Mantel 31 sowie zwei in Axialabstand voneinander angeordnete, radial federnde Federelemente 32 auf, die sich zwischen der Nabe 30 und dem Mantel 31 abstützen. Die Federelemente 32 sind so ausgeführt, daß sie eine relativ niedrige radiale Steifigkeit und eine große axiale und tangentiale Steifigkeit aufweisen. Letzteres gewährleistet, daß kein sekundäres tangentiales oder axiales Spiel im Schneckengetriebe 12 auftritt.

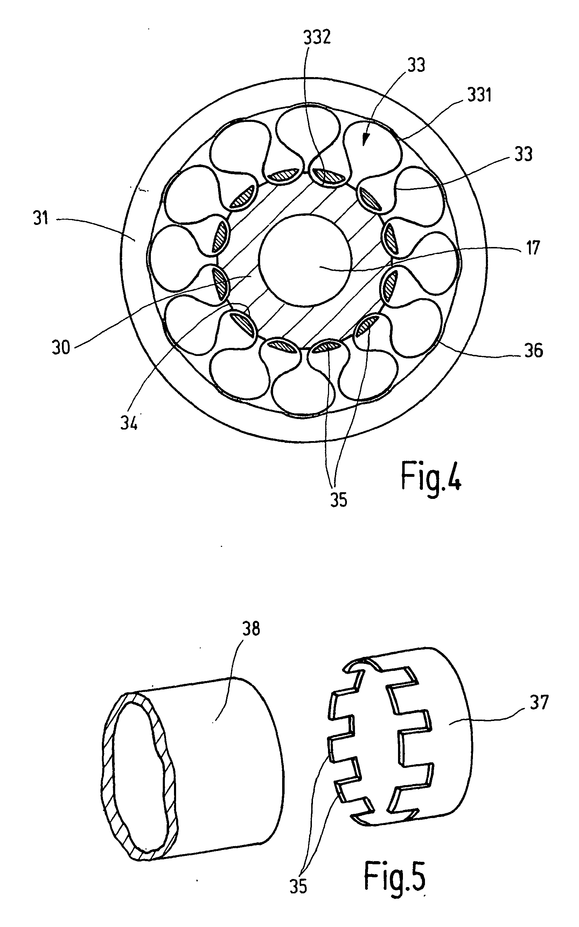

Die erfindungsgemäßen, in Fig. 1 im Axialschnitt schematisch dargestellten Federelemente 32 entsprechend Anspruch 1 sind in Fig. 4 in Draufsicht im Detail zu sehen. Das Federelement 32 ist aus einem dünnen Federband 33 gefertigt und mäanderförmig gebogen und so in den Zwischenraum zwischen Nabe 30 und Mantel 31 eingelegt, daß die größeren Mäanderbögen 331 an der Innenwand des Mantels 31 und die kleineren Mäanderbögen 332 an dem Umfang der Nabe 30 unter radialer Vorspannung anliegen. Die kleineren Mäanderbögen 332 liegen dabei mit einem Bandabschnitt in in die Nabe 30 eingearbeiteten Vertiefungen 34 formschlüssig ein und werden von diese Bandabschnitte übergreifenden axialen Fingern 35 in den Vertiefungen 34 radial und axial unverschieblich festgelegt. Die größeren Mäanderbögen 331 liegen mit einem Bandabschnitt in Einwölbungen 36 ein, die in die Innenwand des Mantels 31 äquidistant eingearbeitet sind, und durch die radiale Vorspannung des Federbands 33 drücken sie sich kraftschlüssig an den Wölbungsgrund an. Die größeren Mäanderbögen 331 sind weiterhin so geformt, daß sie mit nur geringem Abstand in Umfangsrichtung nebeneinanderliegen und sich dadurch nach einem größeren Einfederweg aneinander abstützen. Durch diese Ausbildung des Federbands 33 verändert sich ab einer bestimmten Einfederung der größeren Mäanderbögen 331 die Federsteifigkeit des Federelements 32.

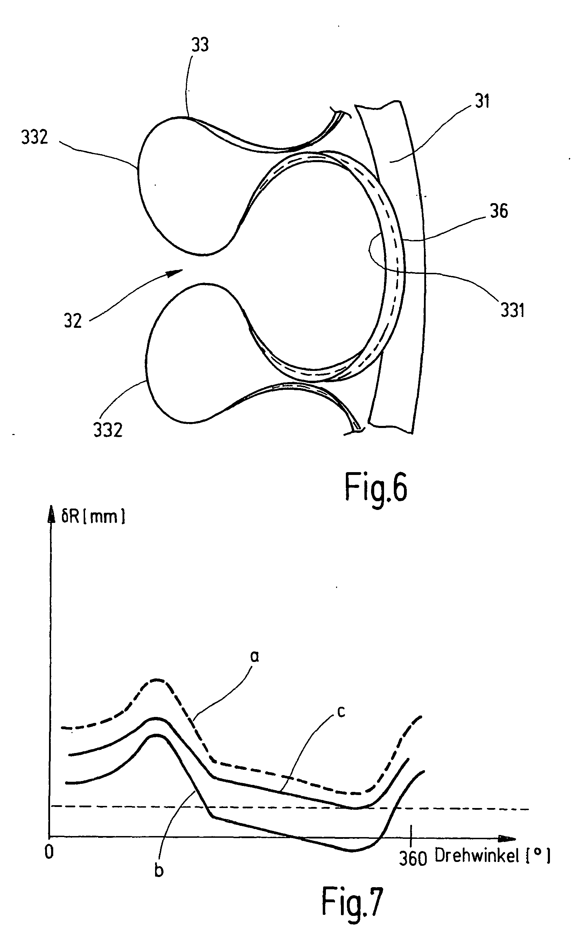

Die das Federband 33 in den Vertiefungen 34 der Nabe 30 festlegenden Finger 35 werden von den Zähnen einer an einem Stirnende in Umfangsrichtung gezahnten Hülse 37 gebildet, die auf die Nabe 30 so aufgeschoben und festgesetzt wird, daß ihre Finger 35 die Bandabschnitte der kleineren Mäanderbögen 332 übergreifen. Wie in Fig. 1 nur schematisch angedeutet ist, wird bei den vorhandenen beiden Federelementen 32 jeweils eine solche Hülse 37 von beiden Stirnseiten der Nabe 30 her auf diese aufgeschoben. Um den axialen Abstand der Federelemente 32 zu gewährleisten, wird zuvor noch eine Distanzhülse 38 auf die Nabe 30 aufgeschoben, an deren ringförmigen Stirnflächen die Zähne der beiden Hülsen 37 anliegen. Die gezahnte Hülse 37 und die Distanzhülse 38, letztere nur ausschnittweise, sind in Fig. 5 dargestellt. Alternativ kann die Distanzhülse 38 mit einer der Hülsen 37 einstückig ausgebildet sein, wobei dann der die Distanzhülse bildende Hülsenabschnitt zum Durchschieben durch das gebogenen Federband 33 des einen Federelements 32 durchgängig geschlitzt sein muß.

Das mäanderförmig gebogene Federband 33 des Federelements 32 ist ausschnittweise in Fig. 6 vergrößert dargestellt. Deutlich ist zu sehen, daß bei nicht eingefedertem größeren Mäanderbogen 331 der mittlere Bandabschnitt des Mäanderbogens 331 in der Einwölbung 36 des Mantels 31 einliegt. Diese Position des Federbands 33 ist strichliniert dargestellt. Federt das Federband 33 radial stärker ein, so legt sich der größere Mäanderbogen 331 an die benachbarten größeren Mäanderbögen 331 an und bei weiterem Einfedern stützen die Mäanderbögen 331 sich in Umfangsrichtung gesehen aneinander ab. Mit dem Aneinanderstoßen der Mäanderbögen 331 verändert sich die Federcharakteristik des Federbands 33, und die radiale Federsteifigkeit nimmt zu. Der eingefederte Zustand des Federbands 33 ist in Fig. 6 ausgezogen dargestellt.

In Fig. 3 sind die erfindungsgemäßen Federelemente 32 in Fig. 1 entsprechend Anspruch 2 dargestellt. Hier besteht das Federelement 32 aus fünf äquidistant angeordneten, annähernd elliptisch gebogenen Biegefedern 39 mit etwa radial abstehenden, abgebogen Federenden 391 aus einem Bandmaterial. Die Biegefedern 39 liegen mit ihren in Umfangsrichtung der Nabe 30 aufspreizenden Federenden 391 in Ausnehmungen 40 kraft- und formschlüssig ein, die in der Nabe 30 um gleiche Umfangswinkel zueinander versetzt eingearbeitet sind. Der von den Federenden 391 in Radialrichtung abgekehrte Bandabschnitt 392 einer jeden Biegefeder 39 liegt wiederum unter radialem Federdruck in einer in die Innenwand des Mantels 31 eingearbeiteten Einwölbung 41 ein. Die Einwölbungen 41 sind wiederum äquidistant über den Umfang angeordnet.

Nach kompletter Montage der Stellvorrichtung wird zur Herstellung der Spielfreiheit im Schneckengetriebe 12 in einem sich anschließenden Justiervorgang die erforderliche Vorspannung eingestellt und werden toleranzbedingte Ungenauigkeiten in der Anordnung von Schnecke 15 und Schneckenrad 16 mit Hilfe der Exzentervorrichtung 26 minimiert. Hierzu wird in das Getriebegehäuse 13 durch eine später mit einem Deckel verschließbare Gehäuseöffnung 131 hindurch eine Meßeinrichtung 42 eingebracht und am Getriebegehäuse 13 befestigt. Die in Fig. 1 nur schematisch angedeutete Meßeinrichtung 42 besitzt vier auf einer Linie angeordneten Sensoren 43, von denen jeweils ein Paar der Sensoren 43 die gegenseitige Auslenkung von Mantel 31 und Nabe 30, also deren Abstand, auf diametralen Seiten der Antriebswelle 17 mißt. Die Sensorsignale werden einer Auswerteeinheit 42 zugeführt, die die Differenz der von den Sensorpaaren gemessenen Auslenkungen bzw. Abstände in Abhängigkeit vom Drehwinkel der Schnecke 15 ausgibt. Die Messung erfolgt während eines langsamen Betriebsmodus, in dem das Schneckenrad 16 eine volle Umdrehung 360° ausführt.

In Fig. 7 ist ein mit der Meßeinrichtung 42 aufgenommenes Diagramm dargestellt. Auf der Ordinate ist die Differenz δR der auf diametralen Seiten der Antriebswelle 17 gemessenen Auslenkungen oder gegenseitigen Abstände von Mantel 31 und Nabe 30 und auf der Abzisse der Drehwinkel der Schnecke 15 aufgetragen. Mit Hilfe dieses Diagramms wird die richtige Einstellung des Schneckengetriebes 12 durchgeführt. Hierzu wird bei gelösten Schraubenbolzen 25 das Motorgehäuse 19 solange verdreht, bis über den vollen Drehwinkelbereich von 360° eine minimale, positive Abstandsdifferenz gewährleistet ist. Dies bedeutet, daß über eine volle Umdrehung der Schnecke 15 zwischen Schnecke 15 und Schneckenrad 16 eine minimale Vorspannung besteht, die die Spielfreiheit sicherstellt. Die Kurve a in Fig. 7 zeigt eine ungünstige Einstellung des Getriebegehäuses 19. Die Vorspannung ist über den gesamten Drehwinkelbereich zu hoch. Nach einer entsprechenden Verdrehung des Getriebegehäuses 13 wird die Kurve b in Fig. 7 gemessen. Auch hier ist die Einstellung der Vorspannung nicht optimal. Die Abstandsdifferenz wird sogar in einem kleinen Drehwinkelbereich negativ, was bedeutet, daß in diesem Drehwinkelbereich Spiel zwischen Schnecke 15 und Schneckenrad 16 vorhanden ist. Nach einer erneuten Korrektur der Verdrehung des Getriebegehäuses 13 am Halter 14 wird schließlich die Kurve c gemessen. Die Kurve c zeigt eine nunmehr akzeptable Einstellung des Getriebegehäuses 13; denn über den vollen Drehwinkelbereich von 360° ist die Abstandsdifferenz positiv und unterschreitet nicht eine gewünschte minimale Abstandsdifferenz. Damit sind die "statischen Ungenauigkeiten" in der Anordnung von Schnecke 15 und Schneckenrad 16 minimiert und eine minimale Vorspannung zwischen Schnecke 15 und Schneckenrad 16 im gesamten Drehwinkelbereich sichergestellt. Die im Betrieb auftretenden "dynamischen Ungenauigkeiten" als Folge von thermischen Verformungen, Fliehkräften oder Verschleiß werden durch die beschriebene innere Elastizität der Schnecke 15 ausgeglichen.

Die Erfindung ist nicht auf das beschriebene Schneckengetriebe beschränkt. So kann in der Stellvorrichtung auch ein Schraubradgetriebe, bei dem ebenfalls Antriebs- und Abtriebswelle gekreuzt sind, oder ein Stirnradgetriebe mit parallel zueinander ausgerichteten Antriebs- und Abtriebswelle verwendet werden.

## Patentansprüche

1. Getriebe für eine Stellvorrichtung mit einem eine Außenverzahnung (151) tragenden ersten Getriebeelement (15), das drehfest auf einer in mindestens einem Lager (24) aufgenommenen Antriebswelle (17) sitzt, und mit einem eine Außenverzahnung (161) tragenden zweiten Getriebeelement (16), das drehfest auf einer Abtriebswelle (18) sitzt und mit seiner Außenverzahnung (161) in die Außenverzahnung (151) des ersten Getriebeelements (15) eingreift, wobei die Position der Lagerachse des mindestens einen Antriebswellen-Lagers (24) relativ verschiebbar zu einem Halter (14) angeordnet ist, und das erste Getriebeelement (15) eine drehfest mit der Antriebswelle (17) verbundene Nabe (30) und einen die Außenverzahnung (15) tragenden, konzentrischen Mantel (31) aufweist, der über mindestens ein radial federndes Federelement (32) an der Nabe (30) abgestützt ist, **dadurch gekennzeichnet, daß** die Abtriebswelle (18) in fester Zuordnung zu dem Halter (14) angeordnet ist, und daß Feststellmittel zum Festsetzen des Antriebswellen-Lagers (24) am Halter (14) in einer gewünschten Verschiebeposition vorgesehen sind, wobei das mindestens eine Federelement (32) aus einem dünnen Federband (33) gefertigt und mäanderförmig gebogen in den Zwischenraum zwischen der Nabe (30) und dem Mantel (31) eingelegt ist.

2. Getriebe für eine Stellvorrichtung mit einem eine Außenverzahnung (151) tragenden ersten Getriebeelement (15), das drehfest auf einer in mindestens einem Lager (24) aufgenommenen Antriebswelle (17) sitzt, und mit einem eine Außenverzahnung (161) tragenden zweiten Getriebeelement (16), das drehfest auf einer Abtriebswelle (18) sitzt und mit seiner Außenverzahnung (161) in die Außenverzahnung (151) des ersten Getriebeelements (15) eingreift, wobei die Position der Lagerachse des mindestens einen Antriebswellen-Lagers (24) relativ verschiebbar zu einem Halter (14) angeordnet ist, und das erste Getriebeelement (15) eine drehfest mit der Antriebswelle (17) verbundene Nabe (30) und einen die Außenverzahnung (15) tragenden, konzentrischen Mantel (31) aufweist, der über mindestens ein radial federndes Federelement (32) an der Nabe (30) abgestützt ist, **dadurch gekennzeichnet, daß** die Abtriebswelle (18) in fester Zuordnung zu dem Halter (14) angeordnet ist, und daß Feststellmittel zum Festsetzen des Antriebswellen-Lagers (24) am Halter (14) in einer gewünschten Verschiebeposition vorgesehen sind, wobei das Federelement (32) eine Mehrzahl von äquidistant angeordneten, ellipsenförmig gebogenen Biegefedern (39) mit etwa radial abstehenden Federenden (391) aus einem Federbandmaterial aufweist, die mit ihren in Tangentialrichtung aufspreizenden Federenden (391) in in die Nabe (30) eingearbeiteten Ausnehmungen (40) kraftschlüssig aufgenommen sind und mit ihren von den Federenden (391) abgekehrten gebogenen Bandabschnitten (392) in in den Mantel (31) eingearbeiteten Einwölbungen (41) einliegen.

3. Getriebe nach einem der Ansprüche 1 oder 2, **dadurch gekennzeichnet, daß** zwischen dem Antriebswellen-Lager (24) und dem Halter (14) eine die Relativverschiebung bewirkende Exzentervorrichtung (26) angeordnet ist.

4. Getriebe nach Anspruch 3, **dadurch gekennzeichnet, daß** die Exzentervorrichtung (26) zwei aneinanderliegende, zylinderförmige Paßflächen (271, 281) aufweist, von denen eine dem Antriebswellen-Lager (24) zugeordnet und exzentrisch zur Lagerachse (241) angeordnet ist und die andere dem Halter (14) zugeordnet ist, und daß die Paßflächen (271, 281) gegeneinander verdrehbar sind.

5. Getriebe nach Anspruch 4, **dadurch gekennzeichnet, daß** die Exzentervorrichtung (26) zwei gegeneinander verdrehbare Exzenterringe (27, 28) aufweist, deren aneinanderliegende Ringflächen die Paßflächen (271, 281) bilden, und daß der innere Exzenterring (27) dem Antriebswellen-Lager (24) und der äußere Exzenterring (28) dem Halter (14) zugeordnet ist.

6. Getriebe nach einem der Ansprüche 1 - 5, **dadurch gekennzeichnet, daß** das mindestens eine Antriebswellen-Lager (24) in einem Motorgehäuse (19) eines die Antriebswelle (17) antreibenden Elektromotors (11) fest aufgenommen und die Abtriebswelle (18) in einem Getriebegehäuse (13) drehgelagert ist, daß das Motorgehäuse (19) und das Getriebegehäuse (13) am Halter (14) befestigt sind und daß die Relativverschieblichkeit des mindestens einen Antriebswellen-Lagers (24) durch eine verschiebbare Festlegung des Motorgehäuses (19) am Halter (14) hergestellt ist.

7. Getriebe nach Anspruch 4 und 6, **dadurch gekennzeichnet, daß** die eine der Paßflächen (271, 281) am Motorgehäuse (19) und die andere der Paßflächen (271, 281) am Halter (14) ausgebildet ist und daß das Motorgehäuse (19) relativ zum Halter (14) verdrehbar und mittels der Feststellmittel (25) am Halter(14) festsetzbar ist.

8. Getriebe nach Anspruch 5 und 6, **dadurch gekennzeichnet, daß** der innere Exzenterring (27) mit dem Motorgehäuse (19) und der äußere Exzenterring (28) mit dem Halter (14) starr verbunden ist und daß die Feststellmittel (25) zwischen Motorgehäuse (19) und Halter (14) wirksam sind.

9. Getriebe nach einem der Ansprüche 4 - 8, **dadurch gekennzeichnet, daß** mittels der Exzentervorrichtung (26) eine Einstellung der Antriebs- und Abtriebswelle (17, 18) so vorgenommen ist, daß über eine volle Umdrehung des ersten Getriebeelements (15) zwischen den Getriebeelementen (15, 16) eine minimale Vorspannung besteht.

10. Getriebe nach den Ansprüchen 6 und 9, **dadurch gekennzeichnet, daß** zur Einstellung der Vorspannung an dem Getriebegehäuse (13) eine Meßeinrichtung (42) angeordnet ist, die den gegenseitigen Abstand von Mantel (31) und Nabe (30) des ersten Getriebeelements (15) in Abhängigkeit vom Drehwinkel über eine volle Umdrehung des ersten Getriebeelements (15) mißt, und daß eine Verdrehung des Motorgehäuses (19) am Halter (14) solange vorgenommen wird, bis der gemessene Abstand bei allen Drehwinkeln wenig kleiner ist als der maximal mögliche.

11. Getriebe nach Anspruch 10, **dadurch gekennzeichnet, daß** die Meßeinrichtung (42) vier längs einer Linie angeordnete Sensoren (43), von denen jeweils ein Paar Sensoren (43) den gegenseitigen Abstand von Mantel (31) und Nabe (30) auf diametral gegenüberliegenden Seiten der Antriebswelle (17) erfaßt, und eine Auswerteeinheit (44) aufweist, die aus den Sensorsignalen der Sensorpaare die Differenz der Abstände in Abhängigkeit vom Drehwinkel des ersten Getriebeelements (15) ausgibt, und daß die Verdrehung des Motorgehäuses (19) so vorgenommen wird, daß über den vollen Drehwinkelbereich von 360° eine minimale, positive Abstandsdifferenz meßbar ist.

12. Getriebe nach Anspruch 2, **dadurch gekennzeichnet, daß** die Biegefeder (39) so ausgebildet und angeordnet ist, daß sie sich ab einer bestimmten radialen Einfederung an den beiden benachbarten Biegefedern (39) in Umfangsrichtung der Nabe (30) gesehen abstützen.

13. Getriebe nach Anspruch 1, **dadurch gekennzeichnet, daß** das von einem zwischen Nabe (30) und Mantel (31) umlaufenden, mäanderförmig gebogenen Federband (33) gebildetes Federelement (32) an dem Mantel (31) sich abstützende größere Mäanderbögen (331) und an der Nabe (30) sich abstützende kleinere Mäanderbögen (332) aufweist, wobei das Federband (33) mit seinen kleineren Mäanderbögen (332) an der Nabe (309) befestigt ist.

14. Getriebe nach Anspruch 13, **dadurch gekennzeichnet, daß** die größeren Mäanderbögen (331) so ausgebildet und angeordnet sind, daß sie sich ab einem bestimmten radialen Einfederweg in Umfangsrichtung der Nabe (30) gesehen aneinander abstützen.

15. Getriebe nach Anspruch 13 oder 14, **dadurch gekennzeichnet, daß** die kleineren Mäanderbögen (332) mit einem Bandabschnitt in in die Nabe (30) eingearbeiteten Vertiefungen (34) formschlüssig einliegen und von die Bandabschnitte übergreifenden Fingern (35) in den Vertiefungen (34) festgelegt sind.

16. Getriebe nach Anspruch 15, **dadurch gekennzeichnet, daß** die Finger (35) von Zähnen einer an einem Stirnende in Umfangsrichtung gezahnten Hülse (37) gebildet sind, die auf die Nabe (30) aufgeschoben ist.

17. Getriebe nach einem der Ansprüche 1-16, **dadurch gekennzeichnet, daß** zwei radial federnde Federelemente (32) im axialen Abstand voneinander vorgesehen sind.

18. Getriebe nach Anspruch 16, **dadurch gekennzeichnet, daß** zwei radial federnde Federelemente (32) im axialen Abstand voneinander vorgesehen sind und daß die gezahnten Hülsen (37) von voneinander abgekehrten Seiten der beiden Federelemente (32) her auf die Nabe (30) aufgeschoben sind und daß zwischen den einander zugekehrten Zahnenden der Hülsen (37) eine auf die Nabe (30) aufgeschobene Distanzhülse (38) einliegt.

19. Getriebe nach Anspruch 18, **dadurch gekennzeichnet, daß** die Distanzhülse (38) mit mindestens einer der beiden gezahnten Hülsen (37) einstückig ausgebildet ist.

20. Getriebe nach einem der Ansprüche 1 - 19, **dadurch gekennzeichnet, daß** das erste Getriebeelement eine Schnecke (15) und das zweite Getriebeelement ein mit der Schnecke (15) kämmendes Schneckenrad (16) eines Schneckengetriebes (12) ist.

## Claims

1. Actuator gearing having a first gearing element (15) which carries an outer toothing (151) and is seated in a rotationally fixed manner on a driving shaft (17) which is held in at least one bearing (24), and having a second gearing element (16) which carries an outer toothing (161), is seated in a rotationally fixed manner on a driven shaft (18) and engages with its outer toothing (161) in the outer toothing (151) of the first gearing element (15), the position of the bearing shaft of the at least one driving shaft bearing (24) being arranged such that it is moveable relative to a bracket (14), and the first gearing element (15) having a hub (30), which is connected to the driving shaft (17) in a rotationally fixed manner, and a concentric casing (31) which carries the outer toothing (15) and rests on the hub (30) via at least one radially resilient spring element (32), **characterized in that** the driven shaft (18) is arranged so as to be fixedly assigned to the bracket (14), and **in that** securing means are provided for fixing the driving shaft bearing (24) to the bracket (14) in a desired movement position, the at least one spring element (32) being produced from a thin spring strip (33) and being inserted, having been bent into a meandering shape, into the intermediate space between the hub (30) and the casing (31).

2. Actuator gearing having a first gearing element (15) which carries an outer toothing (151) and is seated in a rotationally fixed manner on a driving shaft (17) which is held in at least one bearing (24), and having a second gearing element (16) which carries an outer toothing (161), is seated in a rotationally fixed manner on a driven shaft (18) and engages with its outer toothing (161) in the outer toothing (151) of the first gearing element (15), the position of the bearing shaft of the at least one driving shaft bearing (24) being arranged such that it is moveable relative to a bracket (14), and the first gearing element (15) having a hub (30), which is connected to the driving shaft (17) in a rotationally fixed manner, and a concentric casing (31) which carries the outer toothing (15) and rests on the hub (30) via at least one radially resilient spring element (32), **characterized in that** the driven shaft (18) is arranged so as to be fixedly assigned to the bracket (14), and **in that** securing means are provided for fixing the driving shaft bearing (24) to the bracket (14) in a desired movement position, the spring element (32) having a multiplicity of elliptically bent bending springs (39) which are arranged in an equidistant manner, have approximately radially projecting spring ends (391) made from spring strip material, are held in a non-positive manner, by means of their spring ends (391) which spread apart in the tangential direction, in recesses (40) formed in the hub (30), and rest, by means of their strip sections (392), which are bent so as to be turned away from the spring ends (391), in depressions (41) formed in the casing (31).

3. Gearing according to one of Claims 1 or 2, **characterized in that** an eccentric device (26) which effects the relative movement is arranged between the driving shaft bearing (24) and the bracket (14).

4. Gearing according to Claim 3, **characterized in that** the eccentric device (26) has two cylindrical fitting faces (271, 281) which bear against one another, one of which is assigned to the driving shaft bearing (24) and is arranged so as to be eccentric with respect to the bearing axis (241), and the other of which is assigned to the bracket (14), and **in that** the fitting faces (271, 281) can be rotated relative to one another.

5. Gearing according to Claim 4, **characterized in that** the eccentric device (26) has two eccentric rings (27, 28) which can be rotated relative to one another, and whose annular faces, which bear against one another, form the fitting faces (271, 281), and **in that** the inner eccentric ring (27) is assigned to the driving shaft bearing (24) and the outer eccentric ring (28) is assigned to the bracket (14).

6. Gearing according to one of Claims 1 - 5, **characterized in that** the at least one driving shaft bearing (24) is fixedly held in a motor housing (19) of an electric motor (11) which drives the driving shaft (17), and the driven shaft (18) is rotatably mounted in a gearing housing (13), **in that** the motor housing (19) and the gearing housing (13) are fastened to the bracket (14), and **in that** the capacity for relative movement of the at least one driving shaft bearing (24) is produced by the motor housing (19) being secured on the bracket (14) in a moveable manner.

7. Gearing according to Claims 4 and 6, **characterized in that** one of the fitting faces (271, 281) is formed on the motor housing (19) and the other one of the fitting faces (271, 281) is formed on the bracket (14), and **in that** the motor housing (19) can be rotated relative to the bracket (14) and can be fixed to the bracket using the securing means (25).

8. Gearing according to Claim 5 and 6, **characterized in that** the inner eccentric ring (27) is rigidly connected to the motor housing (19) and the outer eccentric ring (28) is rigidly connected to the bracket (14), and **in that** the securing means (25) act between the motor housing (19) and the bracket (14).

9. Gearing according to one of Claims 4 - 8, **characterized in that** the driving and driven shafts (17, 18) are set by means of the eccentric device (26) in such a way that there is minimum preload between the gearing elements (15, 16) over one full revolution of the first gearing element (15).

10. Gearing according to Claims 6 and 9, **characterized in that** to set the preload, a measuring device (42), which measures the spacing between the casing (31) and the hub (30) of the first gearing element (15) as a function of the rotational angle over one full revolution of the first gearing element (15), is arranged on the gearing housing (13), and **in that** the motor housing (19) is rotated on the bracket (14) until the measured spacing at all rotational angles is slightly smaller than the maximum possible spacing.

11. Gearing according to Claim 10, **characterized in that** the measuring device (42) has four sensors (43) arranged along a line, of which one pair of sensors (43) in each case detects the spacing between the casing (31) and the hub (30) on diametrically opposite sides of the driving shaft (17), and an evaluating unit (44) which, from the sensor signals of the sensor pairs, outputs the difference between the spacings as a function of the rotational angle of the first gearing element (15), and **in that** the motor housing (19) is rotated until a minimum positive spacing difference can be measured over the entire rotational angle range of 360°.

12. Gearing according to Claim 2, **characterized in that** the bending springs (39) are embodied and arranged such that, from a certain radial spring deflection onwards, they rest against the two adjacent bending springs (39) in the circumferential direction of the hub (30).

13. Gearing according to Claim 1, **characterized in that** the spring element (32), which is formed from a spring strip (33) which has been bent into a meandering shape and runs around between the hub (30) and the casing (31), has relatively large meandering curves (331) which rest against the casing (31) and relatively small meandering curves (332) which rest against the hub (30), the spring strip (33) being fastened, by means of its relatively small meandering curves (332), to the hub (30).

14. Gearing according to Claim 13, **characterized in that** the relatively large meandering curves (331) are embodied and arranged such that from a certain radial spring compression travel onwards, they rest against one another as seen in the circumferential direction of the hub (30).

15. Gearing according to Claim 13 or 14, **characterized in that** the relatively small meandering curves (332) rest in a positive manner by means of a band section in depressions (34) formed in the hub (30) and are secured in the depressions (34) by means of fingers (35) which engage over the band sections.

16. Gearing according to Claim 15, **characterized in that** the fingers (35) are formed by teeth of a sleeve (37) which is toothed in the circumferential direction at one end side and is pushed on to the hub (30).

17. Gearing according to one of Claims 1 - 16, **characterized in that** two radially resilient spring elements (32) are provided at an axial distance from one another.

18. Gearing according to Claim 16, **characterized in that** two radially resilient sprung elements (32) are provided at an axial distance from one another, **in that** the toothed sleeves (37) are pushed on to the hub (30) from sides, which are turned away from each other, of the two spring elements (32), and **in that** a spacer sleeve (38), which is pushed onto the hub (30), is inserted between the tooth ends, which face one another, of the sleeves (37).

19. Gearing according to Claim 18, **characterized in that** the spacer sleeve (38) is formed in one piece with at least one of the two toothed sleeves (37).

20. Gearing according to one of Claims 1 - 9, **characterized in that** the first gearing element is a worm (15) and the second gearing element is a worm gear (16), which meshes with the worm (15), of a worm gear mechanism (12).

## Revendications

1. Engrenage pour un actionneur, comprenant un premier élément d'engrenage (15) portant une denture extérieure (151) et solidaire en rotation sur un arbre d'entraînement (17) logé dans au moins un palier (24), ainsi qu'un second élément d'engrenage (16) portant une denture extérieure (161), solidaire en rotation sur un arbre de sortie (18) et dont la denture extérieure (161) s'engage dans la denture extérieure (151) du premier élément d'engrenage (15),
la position de l'axe de palier du palier d'arbre d'entraînement (24) étant relativement mobile par rapport à un support (14), et alors que le premier élément d'engrenage (15) comporte un moyeu (30) solidaire en rotation sur l'arbre d'entraînement (17) et une gaine (31) concentrique portant la denture extérieure (15), laquelle s'appuie sur le moyeu (30) par l'intermédiaire d'au moins un élément de ressort (32) radialement élastique.
**caractérisé en ce que**
l'arbre de sortie (18) est fixe par rapport au support (14), et des éléments de fixation sont prévus pour fixer le palier d'arbre d'entraînement (24) sur le support (14) dans une position de déplacement souhaitée, et l'élément de ressort (32) fabriqué à partir d'une mince bande à ressort (33) est inséré recourbé en forme de méandres dans l'intervalle compris entre le moyeu (30) et la gaine (31).

2. Engrenage pour un actionneur comportant un premier élément d'engrenage (15) portant une denture extérieure (151) et solidaire en rotation sur un arbre d'entraînement (17) logé dans au moins un palier (24), ainsi qu'un second élément d'engrenage (16) portant une denture extérieure (161), solidaire en rotation sur un arbre de sortie (18) et dont la denture extérieure (161) s'engage dans la denture extérieure (151) du premier élément d'engrenage (15),
la position de l'axe de l'au moins un palier d'arbre d'entraînement (24) est relativement mobile vis-à-vis d'un support (14), alors que le premier élément d'engrenage (15) comporte un moyeu (30) solidaire en rotation sur l'arbre d'entraînement (17), et une gaine (31) concentrique portant la denture extérieure (15), laquelle s'appuie sur le moyeu (30) par l'intermédiaire d'au moins un élément de ressort (32) radialement élastique,
**caractérisé en ce que**
l'arbre de sortie (18) est fixe par rapport au support (14), et des éléments de fixation sont prévus pour fixer le palier d'arbre d'entraînement (24) sur le support (14) dans une position de déplacement souhaitée, l'élément de ressort (32) comportant une multiplicité de ressorts de flexion (39) équidistants et recourbés en forme d'ellipse avec des extrémités de ressort (391) s'écartant à peu près radialement, composés d'un matériau de bande à ressort, ces ressorts spiraux ayant leurs extrémités (391) s'élargissant dans la direction tangentielle, loger par liaison par la force dans des évidements (40) pratiqués dans le moyeu (30) et l'insérant, avec leurs sections de bande recourbées (392) opposées aux extrémités de ressort (391), dans les incurvations(41) de la gaine (31).

3. Engrenage selon l'une des revendications 1 ou 2,
**caractérisé en ce qu'**
un dispositif excentrique (26) provoquant un déplacement relatif est placé entre le palier d'arbre d'entraînement (24) et le support (14).

4. Engrenage selon la revendication 3,
**caractérisé en ce que**
le dispositif excentrique (26) comporte deux surfaces d'ajustage cylindriques placées l'une contre l'autre (271, 281) dont l'une est associée au palier de l'arbre d'entraînement (24) et est excentré par rapport à l'axe de palier (241), et dont l'autre est associée au support (14), et les surfaces de contact (271, 281) peuvent tourner l'une par rapport à l'autre.

5. Engrenage selon la revendication 4,
**caractérisé en ce que**
le dispositif excentrique (26) comporte deux anneaux excentriques (27, 28) pouvant tourner l'un par rapport à l'autre et dont les surfaces annulaires placées l'une contre l'autre forment les surfaces (271, 281), l'anneau excentrique intérieur (27) est associé au palier d'arbre d'entraînement (24) et l'anneau excentrique extérieur (28) est associé au support (14).

6. Engrenage selon l'une des revendications 1 à 5,
**caractérisé en ce que**
le palier d'arbre d'entraînement (24) est logé de manière fixe dans un boîtier (19) d'un moteur électrique (11) entraînant l'arbre d'entraînement (17), et l'arbre de sortie (18) est logé de manière rotative dans un carter d'engrenages (13) le boîtier de moteur (19) et le carter d'engrenages 13) sont fixés sur le support (14), et la mobilité relative du palier d'arbre d'entraînement (24) est réalisée au moyen d'une fixation déplaçable du boîtier de moteur (19) sur le support (14).

7. Engrenage selon les revendications 4 et 6,
**caractérisé en ce que**
l'une des surfaces (271, 281) est conçue sur le boîtier de moteur (19) et l'autre surface de contact (271, 281) sur le support (14), et le boîtier de moteur (19) peut tourner relativement par rapport au support (14) et peut être fixé sur le support (14) à l'aide d'éléments de fixation (25).

8. Engrenage selon les revendications 5 et 6,
**caractérisé en ce que**
l'anneau excentrique intérieur (27) est relié de manière rigide au boîtier de moteur (19) et l'anneau excentrique extérieur (28) est relié de manière rigide au support (14), et les éléments de fixation (25) agissent de manière efficace entre le boîtier de moteur (19) et le support (14).

9. Engrenage selon l'une des revendications 4 à 8,
**caractérisé en ce qu'**
un ajustement de l'arbre d'entraînement et de l'arbre de sortie (17, 18) est effectué au moyen du dispositif excentrique (26) de telle sorte que, sur une rotation complète du premier élément d'engrenage (15), il existe une précontrainte minimale entre les éléments d'engrenage (15, 16).

10. Engrenage selon les revendications 6 et 9,
**caractérisé en ce qu'**
un dispositif de mesure mis en place pour le réglage de la précontrainte sur le carter d'engrenages (13), mesure la distance séparant la gaine (31) et le moyeu (30) du premier élément d'engrenage (15) en fonction de l'angle de rotation sur une rotation complète du premier élément d'engrenage (15), et le boîtier de moteur (19) effectue une rotation au niveau du support (14) jusqu'à ce que la distance mesurée pour tous les angles de rotation soit la distance maximale possible.

11. Engrenage selon la revendication 10,
**caractérisé en ce que**
le dispositif de mesure (42) comporte quatre détecteurs (43) disposés le long d'une ligne, parmi lesquels chaque paire de détecteurs (43) détermine la distance séparant la gaine (31) et le moyeu (30) sur des côtés diamétralement opposés de l'arbre d'entraînement (17), ainsi qu'une unité d'exploitation qui émet, à partir des signaux de détection des paires de détecteurs, la différence des distances en fonction de l'angle de rotation du premier élément d'engrenage (15) ; et le boîtier de moteur (19) effectue une rotation de telle sorte que, sur toute l'étendue de l'angle de rotation de 360°, il soit possible de mesurer une différence de distance positive minimale.

12. Engrenage selon la revendication 2,
**caractérisé en ce que**
le ressort de flexion (39) est conçu et disposé de telle sorte que, suite à une compression radiale déterminée du ressort, il s'appuie sur les deux ressorts de flexion (39) voisins, dans la direction périphérique du moyeu (30).

13. Engrenage selon la revendication 1,
**caractérisé en ce que**
l'élément de ressort (32), composé d'une bande à ressort (33) recourbée en forme de méandres et en rotation entre le moyeu (30) et la gaine (31), comporte des arcs de méandre (331) relativement grands s'appuyant sur la gaine (31) et des arcs de méandre plus petits (332) s'appuyant sur le moyeu (30), la bande à ressort (33) et ses arcs de méandre plus petits (332) étant fixée sur le moyeu (30).

14. Engrenage selon la revendication 13,
**caractérisé en ce que**
les arcs de méandre plus grands (331) sont conçus et disposés de telle sorte que, à partir d'un certain chemin élastique radial, ils s'appuient les uns contre les autres, dans la direction périphérique du moyeu (30).

15. Engrenage selon la revendication 13 ou 14,
**caractérisé en ce que**
les arcs de méandre plus petits (332) s'insèrent par complémentarité de forme, avec une section de bande, dans des évidements (34) du moyeu (30) et sont fixés dans ces évidements (34) par des doigts (35) recouvrant les sections de bande.

16. Engrenage selon la revendication 15,
**caractérisé en ce que**
les doigts (35) sont formés par les dents d'une douille (37), dentée sur une extrémité frontale dans la direction périphérique, cette douille étant glissée sur le moyeu (30).

17. Engrenage selon l'une des revendications 1 à 16,
**caractérisé en ce que**
deux éléments de ressort (32) radialement élastiques sont prévus à une certaine distance axiale l'un de l'autre.

18. Engrenage selon la revendication 16,
**caractérisé en ce que**
deux éléments de ressort (32) radialement élastiques sont prévus à une distance axiale l'un de l'autre et **en ce que** les douilles dentées (37) sont glissées sur le moyeu (30), par les côtés opposés, des deux éléments de ressort (32) ; et qu'entre les extrémités dentées, orientées l'une vers l'autre, des douilles (37) s'insère une douille d'écartement (38) glissée sur le moyeu (30).

19. Engrenage selon la revendication 18,
**caractérisé en ce que**
la douille d'écartement (38) est constituée d'une seule pièce avec au moins l'une des deux douilles dentées (37).

20. Engrenage selon l'une des revendications 1 à 19,
**caractérisé en ce que**
le premier élément d'engrenage est une vis sans fin (15) et le second élément d'engrenage est une roue à vis sans fin (16), s'engrenant dans la vis sans fin (15), d'un engrenage à vis sans fin (12).
